# EUROPEAN PATENT APPLICATION

(11) **EP 1 593 545 A2**
(43) Date of publication of application: **09.11.2005**
(21) Application number: 05103719.0
(22) Date of filing: 04.05.2005
(51) Int. Cl.: B60N 2/28

(54) **Seat for carrying children in cars**

(30) Priority: 07.05.2004 IT MO20040110
(71) Applicant: Bellelli S.R.L., 45021 Badia Polesine RO (IT)
(72) Inventor: Bellelli, Tiziano, 45100 Rovigo (IT)
(74) Representative: Modiano, Micaela Nadia

(57) **Abstract**

A seat (1) for carrying children in cars, comprising a supporting base (5) for a seat cradle (2) provided with a sitting surface (3) and with a back (4) and with means for adjusting the inclination of the seat cradle with respect to the base, which comprise a substantially curved guide (8), which is associated with the base (5) and in which the sitting surface (3) is engaged slidingly, and means (17) for removably locking the sliding of the sitting surface in the guide (8), which comprise at least one recess (18), which is formed in the base (5) and is substantially transverse with respect to the guide, and at least one locking pin (19), which can be inserted in, and extracted from, the recess (18) and is associated with an actuation lever (20), which is connected below the sitting surface (3) so that it can slide toward and away from the back (4) in a direction that is parallel to the sitting surface (3).

## Description

The present invention relates to a seat for carrying children in cars.

It is known that very young children cannot be carried in cars unless one uses particular seats that have dimensions that match the size of the child and are provided with belts that are suitable to retain the child stably in completely safe conditions.

These known types of seat are commonly provided with a conventional seat cradle connected to a base, which in turn can be connected firmly to the seats of the vehicle.

The seat cradle is generally supported on the base so that it can rotate about an axis that is horizontal and parallel with respect to the sitting surface and to the back of the seat cradle, so that it is possible to adjust the inclination of the seat between an upright configuration and a reclined configuration depending on the requirements and comfort of the child.

In practice, the seat cradle is pivoted to the base and/or is connected thereto by interposing a curved guide, on which it can slide until it reaches the intended position, in which it can be blocked by way of conventional removable locking means (pins, screws, etc).

The inclination is adjusted generally by manual pushing on the part of the user, but it is also possible to provide gear systems constituted by a pinion and a rack, in which it is possible to modify the position of the seat cradle by turning an actuation knob.

These known types of seat are not free from drawbacks, including the fact that they are scarcely flexible and are difficult to use.

It is in fact noted that their normal operation is particularly complicated and scarcely practical, since it requires the use of both hands on the part of the user, one hand to arrange the seat in the intended position and the other hand to activate/deactivate the removable locking means.

To overcome these drawbacks, seats are known which are provided with mechanisms of the self-locking type that are suitable to move the seat cradle and are constituted for example by a rack and by a worm screw that are mutually coupled.

However, these mechanisms are complicated from a constructive standpoint and are susceptible of further improvements.

As an alternative, seats are known which are provided with a plurality of recesses formed along the curved guide interposed between the seat and the base and inside which it is possible to insert a locking pin that is associated with an actuation lever, which is arranged below the sitting surface and can be gripped in front of said surface and pivoted thereto about a substantially horizontal axis proximate to the back.

The rotation of the lever on the part of the user allows to insert/remove the locking pin from the recesses in contrast with one or more return springs; by pushing the lever parallel to the curved guide it is instead possible to move the seat cradle and arrange it in the intended position.

However, even these seats are not free from drawbacks and in particular are awkward to move.

Their operation in fact requires the lever to be operated by performing two mutually substantially perpendicular movements, one to move it away from the curved guide in order to disengage the pin and the other to push the seat into the intended position.

For the person performing these movements, they are scarcely practical and awkward from an ergonomic standpoint and can compromise the correct grip of the lever and/or make its actuation tiring and/or not always effective.

The aim of the present invention is to eliminate the above-mentioned drawbacks of the background art, by providing a seat for carrying children in cars that allows to adjust easily and practically the inclination of the seat cradle, allowing the user to perform this operation with movements that are comfortable, functional and ergonomic.

Within this aim, an object of the present invention is to provide a structure that is simple, relatively easy to provide in practice, safe in use, effective in operation, and has a relatively low cost.

This aim and these and other objects that will become better apparent hereinafter are achieved by the present seat for carrying children in cars, comprising a supporting base for a seat cradle provided with a sitting surface and with a back and with means for adjusting the inclination of said seat cradle with respect to said base, which comprise at least one substantially curved guide, which is associated with said base and in which said sitting surface is engaged slidingly, and means for removably locking the sliding of said sitting surface in said guide, characterized in that said removable locking means comprise at least one recess, which is formed in said base and is substantially transverse with respect to said guide, and at least one locking pin, which can be inserted in, and extracted from, said recess and is associated with at least one actuation lever, which is connected below said sitting surface and can slide toward and away from said back in a direction that is substantially parallel to said sitting surface.

Further characteristics and advantages of the present invention will become better apparent from the following detailed description of a preferred but not exclusive embodiment of a seat for carrying children in cars, illustrated by way of non-limiting example in the accompanying drawings, wherein:
Figure 1 is a side elevation view of the seat according to the invention;
Figure 2 is a schematic partial perspective view of the base of the seat according to the invention;
Figure 3 is a perspective view of the seat cradle of the seat according to the invention;
Figure 4 is a perspective view, taken from another angle, of the seat cradle of Figure 3:

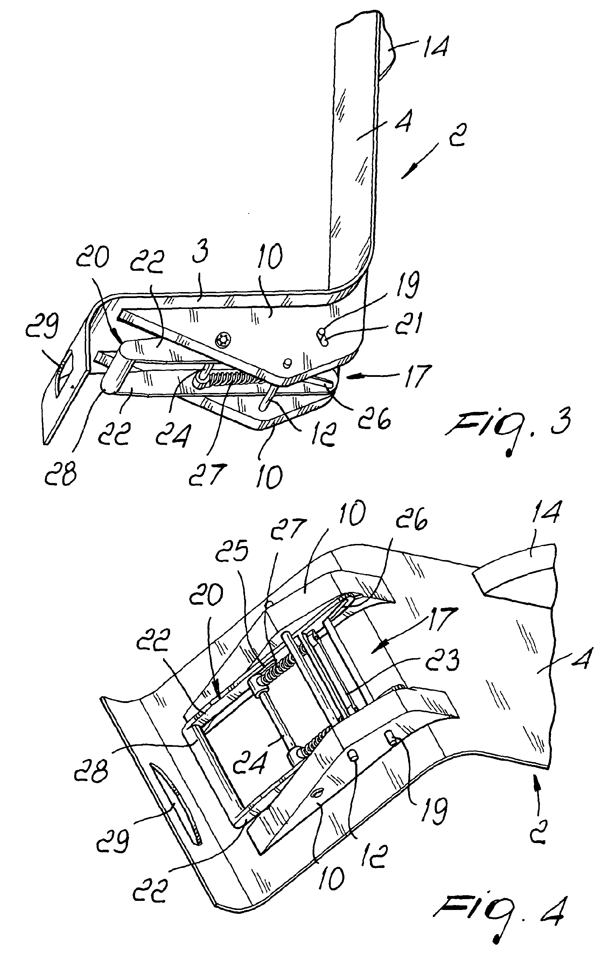

Figure 5 is a schematic partial sectional view of the seat according to the invention in the locking configuration;

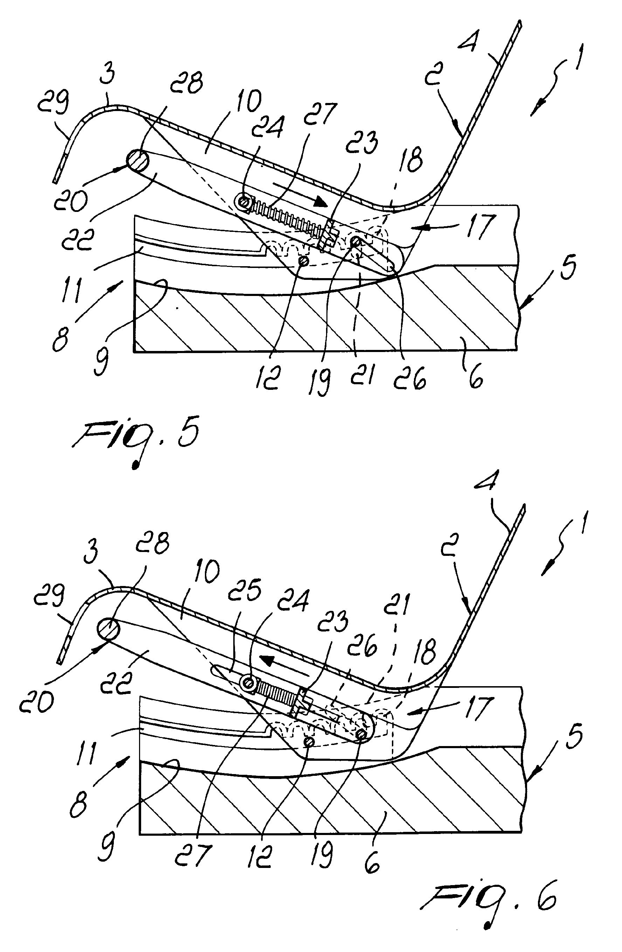

Figure 6 is a schematic and partial sectional view of the seat according to the invention in the release configuration.

With reference to the figures, the reference numeral 1 generally designates a seat for carrying children in cars, which comprises a seat 2, provided with a sitting surface 3 and with a back 4, which is supported on a base 5 that is designed, during use, to be rigidly coupled to one of the seats of a car or the like, as is known in the background art.

In particular, said base is constituted by a substantially horizontal bottom 6 and by a substantially vertical rear wall 7.

The seat 1 is provided with means for adjusting the inclination of the seat cradle 2 with respect to the base 5, of the type that comprises a substantially curved guide 8, which is provided on the bottom 6 and is engaged slidingly by the sitting surface 3 and allows the seat cradle 2 to rotate about a substantially horizontal axis that is parallel to the sitting surface 3 and to the back 4.

In particular, the bottom 6 is contoured so as to form a substantially curved surface 9, on which two lateral side portions 10 of the seat cradle 2 rest slidingly and extend below the sitting surface 3.

Further, the guide 8 comprises two grooves 11, which run parallel to the surface 9 and face each other on opposite sides of said surface; the ends of a bar 12 are engaged slidingly and snugly within said grooves, and said bar passes at right angles through the side portions 10 and in practice prevents the vertical upward movement of the seat cradle 2.

To assist the rotation of the seat cradle 2 with respect to the base 5, the wall 7 can be provided with secondary guiding means, suitable to be engaged slidingly by the back 4.

In greater detail, said secondary guiding means can provide two arc-like recesses or hollows 13, which are provided in the wall 7 and in which corresponding protrusions 14 that protrude from the rear surface of the back 4 can slide; said protrusions are provided with one or more transverse hinges 15, which are engaged along corresponding curved slots 16 provided in said wall.

The means for adjusting the seat according to the invention are further provided with means 17 for removably locking the sliding of the seat cradle 2 in the guide 8; said means comprise, in particular, at least one and preferably a plurality of recesses 18, which are formed in the base 5 and are distributed along said guide, with respect to which they lie transversely, and at least one locking pin 19, which is movably connected to the seat cradle 2 in order to be inserted in, and extracted from, at least one of the recesses 18 by actuating an actuation lever 20.

Conveniently, such pin runs parallel to the sitting surface 3 and to the back 4 and is engaged so that it can slide within two mutually parallel slots 21 provided through the two side portions 10.

In particular, the slots 21 are elongated in such a direction that during the sliding of the seat cradle 2 along the guide 8 they are substantially parallel to the adjacent recess 18 and have at least one portion that can be positioned so that it matches up with said recess, so that it is possible to insert therein the pin 19 for locking the seat cradle 2 on the base 5.

Conveniently, the recesses 18 are distributed along two parallel rows, which are arranged on opposite sides with respect to the side portions 10; each of said rows is connected to one of the grooves 11 and can be engaged by a corresponding end of the pin 19; in practice, during use, the pin 19 can be arranged inside the recesses 18 in the locking configuration and can slide, like the bar 12, in the grooves 11 in the release configuration.

In this regard, it is important to note that the relative distance between the bar 12 and the pin 19 is such that they cannot be arranged simultaneously inside the recesses 18; this entails that in the locking configuration the bar 12 is in any case rigidly coupled inside the grooves 11 and cannot perform transverse movements with respect to the guide 8, avoiding in particular any upward movement of the seat cradle 2.

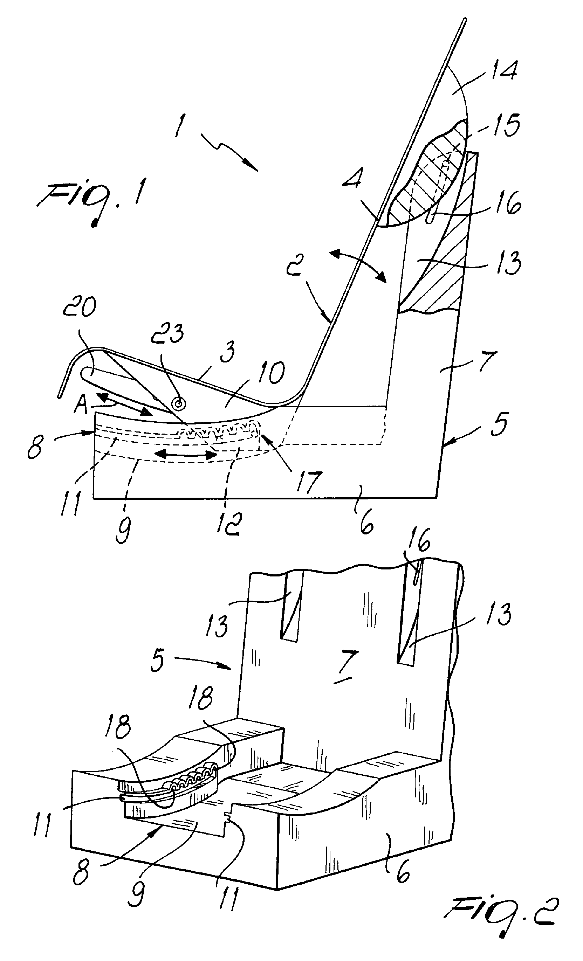

As mentioned, the movement of the pin 19 is achieved by actuating the lever 20; in greater detail, said lever is connected below the sitting surface 3 so that it can slide toward and away from the back 4 in a direction that is parallel to said sitting surface and is designated by the arrow A in Figure 1.

The lever 20 is arranged between the side portions 10 and comprises two straight segments 22, which face each other and are connected to each other by a connecting body 23 that is elongated at right angles to them, each segment being arranged parallel to the direction A in contact with the corresponding side portion 10.

In particular, such segments can slide with respect to the side portions 10 by means of a rod 24 that joins transversely said side portions and is engaged so as to pass through two slots 25, which are provided in the two segments 22 and are arranged along the direction A.

The actuation of the pin 19 on the part of the lever 20 is achieved by means of a pair of slits 26, each of which is formed through a corresponding segment 22 and inside which a corresponding end of the pin 19 is engaged so that it can slide.

The slits are parallel to each other along a direction that is substantially oblique with respect to the slots 21 and to the direction A, so that the sliding of the lever 20 with respect to the seat cradle 2 is such as to move the pin 19 along said slots and slits between the locking and release configurations.

The removable locking means 17 further comprise elastic return means 27 for arranging the lever 20 in the configuration for locking the seat cradle 2.

Said elastic means are formed by two springs, which are interposed between the connecting body 23 and the rod 24 and are preloaded by compression, so that in the locking configuration a residual force suitable to prevent the disengagement of the pin 19 from the recesses 18, unless the user intervenes manually, is applied to the lever 20.

The lever 20 is in fact provided with a grip handle 28, which can be gripped by the user to position said lever in the release configuration in contrast with the elastic means 27.

In particular, said handle is interposed transversely between two ends of the segments 22 and can be gripped at the front portion of the sitting surface 3, on which the user can rest the palm of his hand in order to simultaneously grip the handle 28 and the seat cradle 2; in this manner, both the actuation of the lever 20 and the sliding of the seat cradle 2 along the guide 8 can be performed by using a single hand.

Preferably, finally, the front portion of the sitting surface 3 is folded downward so as to protect the lever 20, and an opening 29 is provided therein which is suitable to make the handle 28 visible to the user.

In practice it has been found that the described invention achieves the intended aim and objects, and in particular the fact is stressed that it allows the user to adjust the inclination of the seat cradle easily, rapidly and without effort by using a single hand.

The particular refinement in using a lever that can perform a translational motion with respect to the sitting surface of the seat cradle in fact allows to actuate the insertion and extraction of the pin into and from the recesses by applying to said lever a force that is substantially parallel to the force required to push the seat along the curved guide; this makes the removable locking means according to the present invention particularly convenient, ergonomic and simple to use.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

The disclosures in Italian Patent Application No. MO2004A000110, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A seat for carrying children in cars, comprising a supporting base for a seat cradle provided with a sitting surface and with a back and with means for adjusting the inclination of said seat cradle with respect to said base, which comprise at least one substantially curved guide, which is associated with said base and in which said sitting surface is engaged slidingly, and means for removably locking the sliding of said sitting surface in said guide, **characterized in that** said removable locking means comprise at least one recess, which is formed in said base and is substantially transverse with respect to said guide, and at least one locking pin, which can be inserted in, and extracted from, said recess and is associated with at least one actuation lever, which is connected below said sitting surface and can slide toward and away from said back in a direction that is substantially parallel to said sitting surface.

2. The seat according to claim 1, **characterized in that** said removable locking means comprise elastic return means for positioning said lever in the configuration for locking said sitting surface.

3. The seat according to one or more of the preceding claims, **characterized in that** said lever comprises a grip handle, which can be gripped in order to position said lever in the configuration for releasing said sitting surface in contrast with said elastic means.

4. The seat according to one or more of the preceding claims, **characterized in that** said removable locking means comprise at least one slit that is formed along said lever and along which said pin is engaged so that it can slide, said slit being arranged substantially obliquely with respect to said recess and with respect to said approach and spacing direction, the sliding of said lever with respect to said sitting surface being suitable to move said pin along said slit and said recess.

5. The seat according to one or more of the preceding claims, **characterized in that** said lever comprises two segments, which face each other and lie substantially along said approach and spacing direction, one of said mutually parallel slits being formed in each one of said segments.

6. The seat according to one or more of the preceding claims, **characterized in that** said removable locking means comprise at least one slot, which is formed in said seat cradle and along which said pin is engaged so that it can slide, said slot being substantially parallel to said recess, at least one portion of said slot being suitable to be arranged so that it substantially matches up with said recess so as to allow the insertion of said pin along said recess.

7. The seat according to one or more of the preceding claims, **characterized in that** said pin lies substantially parallel to said sitting surface and to said back and is engaged so as to pass through two of said slots, which are formed so that they are mutually parallel on corresponding lateral side portions that protrude from said sitting surface, said lever being arranged between said side portions.

8. The seat according to one or more of the preceding claims, **characterized in that** said removable locking means comprise at least one row of said recesses distributed along said guide.

9. The seat according to one or more of the preceding claims, **characterized in that** said removable locking means comprise two of said rows, which are arranged on opposite sides with respect to said side portions and in each of which a corresponding end of said pin can be engaged.

10. The seat according to one or more of the preceding claims, **characterized in that** said elastic means comprise at least one spring, which is interposed between a part of said lever and a portion of said seat cradle.

11. The seat according to one or more of the preceding claims, **characterized in that** said part of the lever is constituted by a body for connecting said segments that lies substantially transversely to said segments.

12. The seat according to one or more of the preceding claims,
**characterized in that** said portion of the seat cradle comprises a rod, which is connected to said seat cradle and is engaged so that it passes through two slots that are formed in one of said segments and lie along said approach and spacing direction.

13. The seat according to one or more of the preceding claims, **characterized in that** said elastic means comprise two of said springs.

14. The seat according to one or more of the preceding claims, **characterized in that** said handle is interposed transversely between two corresponding ends of said segments.

15. The seat according to one or more of the preceding claims, **characterized in that** said handle can be gripped at the front portion of said sitting surface.

16. The seat according to one or more of the preceding claims, **characterized in that** said front portion of the sitting surface is folded substantially downward.

17. The seat according to one or more of the preceding claims, **characterized in that** a through opening that is suitable to make said handle visible is formed in said front portion of the sitting surface.

18. The seat according to one or more of the preceding claims, **characterized in that** said guide comprises a substantially curved surface of said base on which said side portions of the seat cradle can slide.

19. The seat according to one or more of the preceding claims, **characterized in that** said guide comprises two substantially curved grooves, in which the ends of a bar are engaged so that they can slide, said bar passing through said side portions of the seat cradle and being suitable to prevent the vertical lifting of said sitting surface.

20. The seat according to one or more of the preceding claims, **characterized in that** each one of said rows of recesses is connected to one of said grooves, the ends of said pin being arrangeable in said recesses in the locking configuration and in said grooves in the release configuration.

21. The seat according to one or more of the preceding claims, **characterized in that** said base comprises a substantially horizontal bottom, on which said guide engaged by said sitting surface is provided, and a substantially vertical wall, which is provided with secondary guiding means engaged by said back.

22. The seat according to one or more of the preceding claims, **characterized in that** said secondary guiding means comprise at least one arc-like hollow, which is formed in said wall and in which at least one corresponding protrusion is engaged slidingly, said protrusion protruding from the rear surface of said back and being provided with at least one transverse hinge, which is engaged along corresponding curved slots formed in said wall.
